Europäisches Patentamt

European Patent Office

Office européen des brevets

(19)

(11) Numéro de publication: **0 069 208**
**A1**

## (12) DEMANDE DE BREVET EUROPEEN

(21) Numéro de dépôt: **82103584.7**

(22) Date de dépôt: **27.04.82**

(51) Int. Cl.³: **F 03 D 1/06**

(30) Priorité: **14.05.81**

(43) Date de publication de la demande:
**12.01.83 Bulletin 83/2**

(84) Etats contractants désignés:
**BE CH DE FR GB IT LI LU NL SE**

(71) Demandeur: **Menager, Valentin Pierre Marie Louis**
**38 avenue du Château**
**F-41800 Montoire-sur-le-Loir(FR)**

(72) Inventeur: **Menager, Valentin Pierre Marie Louis**
**38 avenue du Château**
**F-41800 Montoire-sur-le-Loir(FR)**

(54) **Eolienne a action divergente.**

(57) **La** structure du rotor de cette éolienne est constituée d'une roue à rayons, dont le moyeu est allongé, de façon à présenter au vent un cône, garni de cornières captant la force divergente du vent. La vitesse de rotation du rotor, est réglée par le coté des cornières parallèle au vent, qui agit comme un ventilateur centrifuge.

Fig-1

EP 0 069 208 A1

*1*

Monsieur MENAGER Valentin

Eolienne à action divergente

Description : La conception de cette éolienne, à pour but principal, la simplicité de construction et de fonctionnement, tout en travaillant par vent faible, comme par vent fort, sans aucun freinage mécanique.

Le rotor de cette éolienne, se compose d'une roue semblable dans sa forme, à une roue de vélo a rayons, avec un long moyeu, de façon à présenter au vent un cône facilitant la tendance divergente du vent, rencontrant un disque ou un rotor d'éolienne.

Des barres cornières, sont placées obliquement, sur les rayons et sur le côté avant de la jante, le coté des cornières parallèle au vent, tourné vers le sens de rotation.

Théorie de fonctionnement

L'action cinétique du vent, frappe les cornières, la réaction de poussée est similaire à l'effet produit sur un plan incliné au vent, mais avec moins de puissance, le rotor tourne donc, mais sa vitesse est limitée également par le coté des cornières parallèle au vent, qui agit comme un ventilateur centrifuge, si la vitesse de rotation dépasse celle désirée.

Cette vitesse est influencée par l'angle de section des cornières, plus il a d'amplitude, plus le freinage est retardé, on peut se baser sur un angle moyen d'environ 100 degrès.

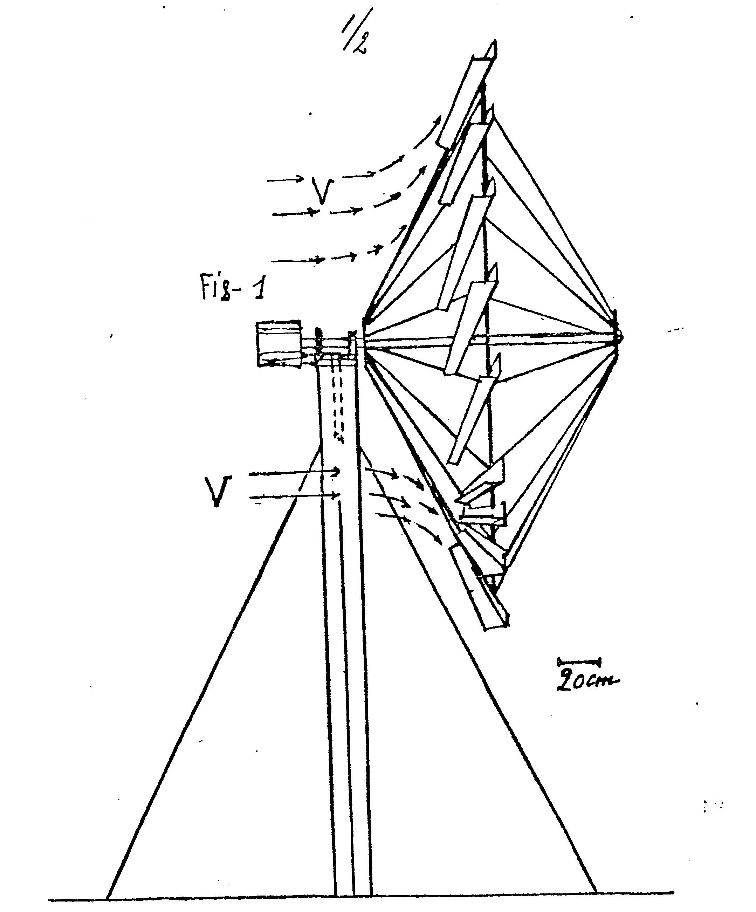

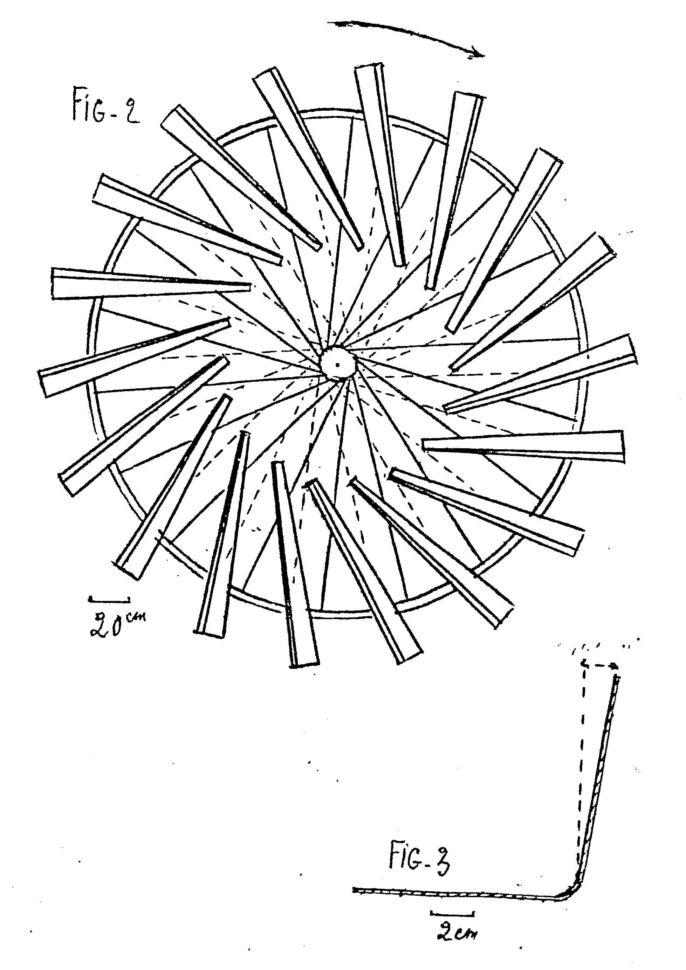

Ce systè me de rotor est très solide, permettant des réalisations de grand diamètre, cependant, il faut éviter les cornières trop larges, laisser un intervalle entre chaque cornière, d'environ le double de la largeur de la cornière, afin de faciliter la réaction du souffle du vent, vers l'intérieur du cône qui se trouve en dépression. La figure 2 présente une vue d'un rotor garnit d'une cornière tous les 20 Degrès, mais dans le cas d'un grand diamètre, par exemple 50 mètres, il y aurai une cornière tous les 3 degrès.

Dans ce cas, il sera préférable de mettre plusieurs couronnes de cornières, dont le nombre diminuera proportionnellement au diamètre de la couronne.

L'éolienne de la figure 1 est présentée placée derrière un pylône de support maintenu verticalement par des hautans, la dynamo placée en avant du pylône faisant contre pdis.

L'orientation se fait à la manière d'une manche à vent. Pour les grands diamètres, un support triangulaire serait nécessaire de chaque coté du rotor, l'orientation motorisée et commandée par une girouette spéciale pour cet effet.

Afin de compléter la description des dessins sont présentés :

La figure 1 représente une vue de profil de l'Eolienne

La lettre V indique le sens du vent

La figure 2 représente une vue de face du rotor

La figure 3 représente une vue de section d'une cornière - angle 100 degrès

Monsieur MENAGER Valentin

Eolienne à action divergente

   Revendications.

   1°) Eolienne caractérisée par le fait, que le rotor à axe parallèle au vent, est constitué d'une roue à rayons, dont le moyeu est allongé de façon à présenter au vent, un cône favorisant la divergence du vent.

   2°) Eolienne, selon la revendication 1 caractérisée par le fait que le cône du rotor est garni de cornières espacées et placées obliquement pour   capter la force divergente du vent.

   3°) Eolienne, selon les revendications 1 et 2 caractérisée par le fait que le côté des cornières parallèle au vent agit comme un ventilateur centrifuge, pour régulariser la vitesse du rotor de l'éolienne.

- - - - - -

Ménager tolentin

1/2

0069208

Fig-1

V

V

20cm

FiG-2

20 cm

FiG-3

2 cm

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A- 793 727 (MAIA) *Page 1, lignes 34-40* | 1,2 | F 03 D 1/06 |
| | --- | | |
| A | DE-C- 359 555 (KRÖGER) *Page 1, lignes 30-38* | 3 | |
| | ----- | | |

**DOMAINES TECHNIQUES RECHERCHES (Int. Cl. ³)**

F 03 D

Le présent rapport de recherche a été établi pour toutes les revendications

| Lieu de la recherche | Date d'achèvement de la recherche | Examinateur |
|---|---|---|
| LA HAYE | 23-07-1982 | DE WINTER P.E.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82